# EUROPEAN PATENT APPLICATION

(11) **EP 4 261 922 A1**
(43) Date of publication of application: **18.10.2023**
(21) Application number: 21903230.7
(22) Date of filing: 29.11.2021
(51) Int. Cl.: H01M 4/13, H01G 11/06, H01G 11/26, H01G 11/52, H01M 50/403, H01M 50/414, H01M 50/431, H01M 50/443, H01M 50/446

(54) **COMPOSITION FOR FUNCTIONAL LAYER OF ELECTROCHEMICAL ELEMENT, LAYERED BODY FOR ELECTROCHEMICAL ELEMENT, AND ELECTROCHEMICAL ELEMENT**

(30) Priority: 09.12.2020 JP 2020204572
(71) Applicant: Zeon Corporation, Tokyo 100-8246 (JP)
(72) Inventor: OGIHARA Tasuku, Tokyo 100-8246 (JP)
(74) Representative: Maiwald GmbH
(86) International application number: PCT/JP2021/043713
(87) International publication number: WO 2022/124126

(57) **Abstract**

A composition for an electrochemical device functional layer contains a particulate polymer, a binder, and heat-resistant fine particles. The particulate polymer has a core-shell structure including a core portion formed of a polymer A and a shell portion formed of a polymer B that at least partially covers an outer surface of the core portion, with the polymer A and the polymer B being different from each other. The particulate polymer also has an electrolyte solution contact angle of not less than 0° and not more than 35° and a volume-average particle diameter of not less than 1.0 µm and not more than 10.0 µm.

## Description

### TECHNICAL FIELD

The present disclosure relates to a composition for an electrochemical device functional layer, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

In recent years, further improvements to electrochemical device members such as positive electrodes, negative electrodes, and separators have been studied with the aim of achieving even higher lithium secondary battery performance. In the course of such improvements, stacking of a layer for displaying an expected function such as heat resistance or adhesiveness (i.e., a functional layer) on a substrate has been attempted.

As one specific example, Patent Literature (PTL) 1 proposes a composition for an electrochemical device functional layer that contains a binder, inorganic particles, and a particulate polymer having an average circularity of not less than 0.90 and less than 0.99 and a volume-average particle diameter of not less than 1.0 µm and not more than 10.0 µm. Moreover, PTL 2 discloses a functional layer for an electrochemical device that contains inorganic particles and a particulate polymer having a volume-average particle diameter of not less than 1.0 µm and not more than 10.0 µm. In plan view of a surface of this functional layer for an electrochemical device, the proportion of area occupied by the inorganic particles per unit area of the surface of the functional layer is more than 90%.

### CITATION LIST

### Patent Literature

PTL 1: WO2020/175292A1
PTL 2: WO2020/175079A1

### SUMMARY

### (Technical Problem)

However, a conventional electrochemical device member that includes a functional layer according to the conventional techniques described above has room for further improvement in terms of adhesiveness that can be displayed by the functional layer during a production process of an electrochemical device (hereinafter, also referred to as "process adhesiveness"). Moreover, an electrochemical device produced using the functional layer has room for improvement in terms of electrolyte solution injectability when electrolyte solution is injected during production and in terms of storage characteristics.

Accordingly, one object of the present disclosure is to provide a composition for a functional layer with which it is possible to form a functional layer that has excellent process adhesiveness and can enhance electrolyte solution injectability and storage characteristics of an obtained electrochemical device.

Another object of the present disclosure is to provide a laminate for an electrochemical device including a functional layer that has excellent process adhesiveness and can enhance electrolyte solution injectability and storage characteristics of an obtained electrochemical device, and also to provide an electrochemical device that includes this laminate for an electrochemical device and has excellent electrolyte solution injectability and storage characteristics.

### (Solution to Problem)

The inventor conducted diligent investigation to achieve the objects set forth above. The inventor made a new discovery that when a functional layer is formed using a composition for an electrochemical device functional layer that contains a particulate polymer having an electrolyte solution contact angle and volume-average particle diameter that are within specific ranges and also having a specific core-shell structure, this functional layer has excellent process adhesiveness and can enhance electrolyte solution injectability and storage characteristics of an obtained electrochemical device. In this manner, the inventor completed the present disclosure.

Specifically, the present disclosure aims to advantageously solve the problems set forth above, and a presently disclosed composition for an electrochemical device functional layer comprises a particulate polymer, a binder, and heat-resistant fine particles, wherein the particulate polymer has a core-shell structure including a core portion formed of a polymer A and a shell portion formed of a polymer B that at least partially covers an outer surface of the core portion, with the polymer A and the polymer B being different from each other, and the particulate polymer has an electrolyte solution contact angle of not less than 0° and not more than 35° and a volume-average particle diameter of not less than 1.0 µm and not more than 10.0 µm. Through a composition for an electrochemical device functional layer that contains a particulate polymer having an electrolyte solution contact angle and a volume-average particle diameter that are within specific ranges and also having a specific core-shell structure in this manner, it is possible to form a functional layer that has excellent process adhesiveness and can enhance electrolyte solution injectability and storage characteristics of an obtained electrochemical device.

Note that the "electrolyte solution contact angle" and "volume-average particle diameter" of a particulate polymer can be measured by methods described in the EXAMPLES section of the present specification.

In the presently disclosed composition for an electrochemical device functional layer, it is preferable that the polymer B includes a repeating unit X that includes at least one among a nitrile group-containing monomer unit, an N-methylolamide group-containing monomer unit, and an epoxy group-containing unsaturated monomer unit, and proportional content of the repeating unit X in the polymer B is not less than 0.1 mass% and not more than 60 mass%. When the polymer B forming the shell portion of the particulate polymer includes a repeating unit X including at least one among the monomer units listed above with the specific proportional content set forth above, electrolyte solution injectability of an obtained electrochemical device can be further enhanced.

Note that when a polymer is said to "include a monomer unit" in the present disclosure, this means that "a polymer obtained using that monomer includes a structural unit derived from the monomer". Also note that the proportional content of a monomer unit in a polymer can be measured by a nuclear magnetic resonance (NMR) method such as ¹H-NMR or ¹³C-NMR.

In the presently disclosed composition for an electrochemical device functional layer, the particulate polymer preferably has a degree of swelling in electrolyte solution of not less than 150 mass% and not more than 1,200 mass%. When the degree of swelling in electrolyte solution of the particulate polymer is within the range set forth above, adhesiveness of a functional layer after immersion in electrolyte solution can be increased, and output characteristics of an obtained electrochemical device can be enhanced.

Note that the degree of swelling in electrolyte solution of a particulate polymer can be measured according to a method described in the EXAMPLES section of the present specification.

In the presently disclosed composition for an electrochemical device functional layer, it is preferable that the polymer A includes a (meth)acrylic acid ester monomer unit including an alkyl group having a carbon number of 4 or more in a proportion of 10 mass% or more, and proportional content of a (meth)acrylic acid ester monomer unit including an alkyl group having a carbon number of 4 or more in the polymer B is not less than 0 mass% and not more than 5 mass%. When the polymer A forming the core portion and the polymer B forming the shell portion of the particulate polymer satisfy the specific chemical compositions set forth above, process adhesiveness and blocking resistance of a functional layer can be improved, and output characteristics of an obtained electrochemical device can be enhanced. Note that "blocking resistance" of a functional layer refers to a property of inhibiting unintended adhesion (blocking) from occurring at a timing at which the functional layer is in a stacked state with another member without the aim of adhesion during a production process of an electrochemical device.

In the presently disclosed composition for an electrochemical device functional layer, bulk specific gravity α of the particulate polymer and bulk specific gravity β of the heat-resistant fine particles preferably satisfy a relationship 1 < β/α ≤ 5. When the bulk specific gravity α of the particulate polymer and the bulk specific gravity β of the heat-resistant fine particles satisfy the relationship set forth above, process adhesiveness of a functional layer can be further increased.

Moreover, the present disclosure aims to advantageously solve the problems set forth above, and a presently disclosed laminate for an electrochemical device comprises: a substrate; and a functional layer formed using any one of the compositions for an electrochemical device functional layer set forth above on the substrate. A laminate for an electrochemical device that includes a functional layer formed using the presently disclosed composition for an electrochemical device functional layer in this manner has excellent process adhesiveness and can enhance electrolyte solution injectability and storage characteristics of an obtained electrochemical device.

Furthermore, the present disclosure aims to advantageously solve the problems set forth above, and a presently disclosed electrochemical device comprises the laminate for an electrochemical device set forth above. An electrochemical device that includes the presently disclosed laminate for an electrochemical device has excellent electrolyte solution injectability and storage characteristics.

### (Advantageous Effect)

According to the present disclosure, it is possible to provide a composition for a functional layer with which it is possible to form a functional layer that has excellent process adhesiveness and can enhance electrolyte solution injectability and storage characteristics of an obtained electrochemical device.

Moreover, according to the present disclosure, it is possible to provide a laminate for an electrochemical device including a functional layer that has excellent process adhesiveness and can enhance electrolyte solution injectability and storage characteristics of an obtained electrochemical device, and also to provide an electrochemical device that includes this laminate for an electrochemical device and has excellent electrolyte solution injectability and storage characteristics.

### DETAILED DESCRIPTION

The following provides a detailed description of embodiments of the present disclosure. The presently disclosed composition for an electrochemical device functional layer (hereinafter, also referred to simply as a "composition for a functional layer") is used in formation of a functional layer for an electrochemical device (hereinafter, also referred to simply as a "functional layer") that is included in the presently disclosed laminate for an electrochemical device. Moreover, the presently disclosed laminate for an electrochemical device includes a functional layer that is formed using the presently disclosed composition for an electrochemical device functional layer. Furthermore, the presently disclosed electrochemical device is an electrochemical device that includes at least the presently disclosed laminate for an electrochemical device.

### (Composition for electrochemical device functional layer)

The presently disclosed composition for an electrochemical device functional layer contains a specific particulate polymer, a binder, and heat-resistant fine particles and optionally further contains other components. By using the presently disclosed composition for a functional layer, it is possible to form a functional layer that has excellent process adhesiveness and can enhance electrolyte solution injectability and storage characteristics of an obtained electrochemical device.

### <Particulate polymer>

The particulate polymer contained in the composition for a functional layer is a particulate polymer that satisfies a specific structure and chemical composition and that has an electrolyte solution contact angle and volume-average particle diameter within specific ranges as described in detail below. Note that the particulate polymer may have a particulate form or may have any other form after members have been adhered via a functional layer formed using the composition for a functional layer.

### <<Structure of particulate polymer>>

The particulate polymer has a core-shell structure including a core portion formed of a polymer A and a shell portion formed of a polymer B that at least partially covers an outer surface of the core portion. Although the shell portion may completely cover or partially cover the outer surface of the core portion, it is thought to be preferable that the shell portion completely covers the outer surface of the core portion from a viewpoint of even further increasing process adhesiveness and electrolyte solution injectability of an obtained electrochemical device. As a result of the particulate polymer having a core-shell structure such as described above, it is possible to increase adhesiveness of a functional layer and also to enhance electrolyte solution injectability and storage characteristics of an obtained electrochemical device in a good balance.

### «Chemical composition of shell portion of particulate polymer»

The shell portion is formed of a polymer B. The polymer B preferably includes a repeating unit X that includes at least one among a nitrile group-containing monomer unit, an N-methylolamide group-containing monomer unit, and an epoxy group-containing unsaturated monomer unit. When the polymer B includes a repeating unit X such as described above, affinity of a functional layer with electrolyte solution can be increased, and, as a result, adhesiveness of the functional layer in electrolyte solution can be increased, and electrolyte solution injectability and storage characteristics of an obtained electrochemical device can be enhanced. Note that the repeating unit X may include just one among a nitrile group-containing monomer unit, an N-methylolamide group-containing monomer unit, and an epoxy group-containing unsaturated monomer unit or may include a plurality thereof.

Moreover, in addition to a repeating unit X such as described above, the polymer B preferably includes an aromatic vinyl monomer unit, and may include other monomer units besides these units.

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile is preferable from a viewpoint of enhancing electrolyte solution injectability of an obtained electrochemical device.

Note that one of these nitrile group-containing monomers may be used individually, or two or more of these nitrile group-containing monomers may be used in combination in a freely selected ratio.

### [N-Methylolamide group-containing monomer unit]

Examples of N-methylolamide group-containing monomers that can form an N-methylolamide group-containing monomer unit include N-methylol(meth)acrylamide and N-butoxymethylol(meth)acrylamide. Note that in the present specification, "(meth)acryl" is used to indicate "acryl" or "methacryl". Of these N-methylolamide group-containing monomers, N-methylolacrylamide is preferable from a viewpoint of enhancing electrolyte solution injectability of an obtained electrochemical device. Note that one of these N-methylolamide group-containing monomers may be used individually, or a plurality of these N-methylolamide group-containing monomers may be used in combination.

### [Epoxy group-containing unsaturated monomer unit]

Examples of epoxy group-containing unsaturated monomers that can form an epoxy group-containing unsaturated monomer unit include unsaturated glycidyl ethers such as vinyl glycidyl ether, allyl glycidyl ether, butenyl glycidyl ether, o-allylphenyl glycidyl ether, and glycidyl(2-butenyl) ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. From a viewpoint of enhancing electrolyte solution injectability of an obtained electrochemical device, unsaturated glycidyl ethers and glycidyl esters of unsaturated carboxylic acids are preferable, allyl glycidyl ether, glycidyl(2-butenyl) ether, and glycidyl methacrylate are more preferable, and glycidyl methacrylate is even more preferable.

Note that one of these epoxy group-containing unsaturated monomers may be used individually, or two or more of these epoxy group-containing unsaturated monomers may be used in combination in a freely selected ratio.

Among nitrile group-containing monomer units, N-methylolamide group-containing monomer units, and epoxy group-containing unsaturated monomer units such as described above, it is preferable that the repeating unit X is formed of an epoxy group-containing unsaturated monomer unit. The proportional content of repeating units X in the polymer B when all repeating units included in the polymer B are taken to be 100 mass% is preferably 0.1 mass% or more, more preferably 5 mass% or more, even more preferably 10 mass% or more, and particularly preferably 15 mass% or more, and is preferably 60 mass% or less, and more preferably 50 mass% or less. When the proportional content of repeating units X is within any of the ranges set forth above, affinity of the shell portion of the particulate polymer with electrolyte solution can be increased, and the contact angle of an obtained functional layer with electrolyte solution can be reduced. Consequently, electrolyte solution injectability of an obtained electrochemical device can be enhanced. In particular, in a case in which the proportional content of repeating units X in the polymer B is not more than any of the upper limits set forth above, it is possible to restrict these repeating units X from being present up to a central portion of the particulate polymer and to cause concentration of the repeating units X at a shell portion surface-side of the particulate polymer, consequently enabling higher affinity of the shell portion of the particulate polymer with electrolyte solution.

### [Aromatic vinyl monomer unit]

Examples of aromatic vinyl monomers that can form an aromatic vinyl monomer unit include, but are not specifically limited to, styrene, α-methylstyrene, styrene sulfonic acid, butoxystyrene, and vinylnaphthalene, of which, styrene is preferable.

Note that one of these aromatic vinyl monomers may be used individually, or two or more of these aromatic vinyl monomers may be used in combination in a freely selected ratio.

The proportional content of aromatic vinyl monomer units in the polymer B when all repeating units included in the polymer B are taken to be 100 mass% is preferably 40 mass% or more, and more preferably 50 mass% or more, and is preferably 99.9 mass% or less, more preferably 95 mass% or less, and even more preferably 90 mass% or less. When the proportional content of aromatic vinyl monomer units in the polymer B is within any of the ranges set forth above, electrolyte solution injectability of an obtained electrochemical device can be further enhanced, and a better balance can be achieved with regards to the degree of swelling in electrolyte solution and adhesiveness in electrolyte solution of the particulate polymer.

### [Other monomer units]

No specific limitations are placed on other monomers that can form other monomer units, and various monomers that can be used in formation of the core portion described further below can be used.

Although the proportional content of other monomer units in the polymer B is not specifically limited so long as affinity of a functional layer with electrolyte solution can be increased, the proportional content of other monomer units is preferably 10 mass% or less when all repeating units included in the polymer B are taken to be 100 mass%, and may be 0 mass% (i.e., the polymer B may be a polymer that does not include other monomer units).

In particular, it is preferable that the polymer B does not include a (meth)acrylic acid ester monomer unit including an alkyl group having a carbon number of 4 or more as a substituent or that even in a case in which the polymer B includes such a monomer unit, the content thereof is 5 mass% or less, and more preferably 1 mass% or less. By setting the proportional content of (meth)acrylic acid ester monomer units including an alkyl group having a carbon number of 4 or more as a substituent in the polymer B as not more than any of the upper limits set forth above, it is possible to increase blocking resistance of an obtained functional layer and also to restrict the degree of swelling in electrolyte solution of the particulate polymer from becoming excessively high and to enhance output characteristics of an obtained electrochemical device.

### <<Properties of shell portion of particulate polymer>>

The glass-transition temperature of the polymer B forming the shell portion of the particulate polymer is preferably 60°C or higher, more preferably 70°C or higher, and even more preferably 80°C or higher, and is preferably 200°C or lower, more preferably 150°C or lower, even more preferably 120°C or lower, and particularly preferably 110°C or lower. When the glass-transition temperature of the polymer B is not lower than any of the lower limits set forth above, blocking resistance of an obtained functional layer can be increased. Moreover, when the glass-transition temperature of the polymer is not higher than any of the upper limits set forth above, process adhesiveness of an obtained functional layer can be further increased.

Note that the "glass-transition temperature" of the polymer B can be measured according to a method described in the EXAMPLES section. Also note that the glass-transition temperature of the polymer B can be adjusted by altering the chemical composition of the polymer B. More specifically, the glass-transition temperature can be controlled by adjusting the type and proportion of a unit included as the repeating unit X, for example.

### «Chemical composition of core portion of particulate polymer»

The core portion is formed of a polymer A. The polymer A preferably includes a (meth)acrylic acid ester monomer unit including an alkyl group having a carbon number of 4 or more as a substituent. When the polymer includes a (meth)acrylic acid ester monomer unit including an alkyl group having a carbon number of 4 or more as a substituent, process adhesiveness and blocking resistance of an obtained functional layer can be increased.

Besides the above, the polymer A may further include an aromatic vinyl monomer unit, a cross-linkable monomer unit, and other monomer units.

### [(Meth)acrylic acid ester monomer unit including alkyl group having carbon number of 4 or more]

Examples of monomers that can be used to form a (meth)acrylic acid ester monomer unit including an alkyl group having a carbon number of 4 or more include acrylic acid alkyl esters such as butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. One of these monomers may be used individually, or two or more of these monomers may be used in combination. Of these monomers, 2-ethylhexyl acrylate is preferable from a viewpoint of further enhancing the balance of process adhesiveness of an obtained functional layer and degree of swelling in electrolyte solution.

The proportional content of (meth)acrylic acid ester monomer units including an alkyl group having a carbon number of 4 or more in the polymer A when all repeating units included in the polymer A are taken to be 100 mass% is preferably 10 mass% or more, and more preferably 15 mass% or more, and is preferably 40 mass% or less, and more preferably 30 mass% or less. When the proportional content of (meth)acrylic acid ester monomer units including an alkyl group having a carbon number of 4 or more in the polymer A is not less than any of the lower limits set forth above, process adhesiveness of an obtained functional layer can be further increased. When the proportional content of (meth)acrylic acid ester monomer units including an alkyl group having a carbon number of 4 or more in the polymer A is not more than any of the upper limits set forth above, the degree of swelling in electrolyte solution of the particulate polymer can be restricted from becoming excessively high, and output characteristics of an electrochemical device can be enhanced.

### [Aromatic vinyl monomer unit]

Examples of aromatic vinyl monomers that can be used to form an aromatic vinyl monomer unit include the same monomers as various monomers given as examples of aromatic vinyl monomers that can be used to form an aromatic vinyl monomer unit included in the polymer B of the shell portion.

The proportional content of aromatic vinyl monomer units in the polymer A when all repeating units included in the polymer A are taken to be 100 mass% is preferably 60 mass% or more, and more preferably 70 mass% or more, and is preferably 99 mass% or less, more preferably 90 mass% or less, and even more preferably 80 mass% or less. When the proportional content of aromatic vinyl monomer units in the polymer A is within any of the ranges set forth above, the balance of process adhesiveness of an obtained functional layer and degree of swelling in electrolyte solution can be further enhanced.

### [Other monomer units]

Examples of monomers that can be used to form other monomer units include cross-linkable monomers and acidic group-containing monomers.

For example, a polyfunctional monomer that includes two or more groups displaying polymerization reactivity in the monomer can be used as a cross-linkable monomer. Examples of polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing unsaturated monomers listed in the preceding "Epoxy group-containing unsaturated monomer unit" section. Of these monomers, ethylene glycol dimethacrylate is preferable. Note that one of these cross-linkable monomers may be used individually, or two or more of these cross-linkable monomers may be used in combination in a freely selected ratio.

Examples of acidic group-containing monomers include those that are described further below, but are not specifically limited thereto.

Although the proportional content of other monomer units in the polymer A is not specifically limited so long as the degree of swelling in electrolyte solution of the particulate polymer can be restricted from becoming excessively high and process adhesiveness of a functional layer can be increased, the proportional content of other monomer units is preferably 10 mass% or less when all repeating units included in the polymer A are taken to be 100 mass%, and may be 0 mass% (i.e., the polymer A may be a polymer that does not include other monomer units).

In particular, it is preferable that the polymer A does not include a nitrile group-containing monomer unit, an N-methylolamide group-containing monomer unit, and an epoxy group-containing unsaturated monomer unit or that in a case in which the polymer A does include such monomer units, the total proportional content thereof is less than 0.1 mass%.

### <<Properties of core portion of particulate polymer>>

The glass-transition temperature of the polymer A forming the core portion of the particulate polymer is preferably 50°C or higher, and is preferably 90°C or lower, more preferably 80°C or lower, and even more preferably 70°C or lower. When the glass-transition temperature of the polymer A is not lower than the lower limit set forth above, blocking resistance of an obtained functional layer can be increased. Moreover, when the glass-transition temperature of the polymer is not higher than any of the upper limits set forth above, process adhesiveness of an obtained functional layer can be further increased.

Note that the "glass-transition temperature" of the polymer A can be measured according to a method described in the EXAMPLES section. Also note that the glass-transition temperature of the polymer A can be adjusted by altering the chemical composition of the polymer A. More specifically, the glass-transition temperature of the polymer A can be raised by increasing the amount of cross-linkable monomer used in production of the polymer A, for example.

### «Electrolyte solution contact angle of particulate polymer»

The electrolyte solution contact angle of the particulate polymer is required to be not less than 0° and not more than 35°, and is preferably 33° or less, more preferably 30° or less, even more preferably 28° or less, and particularly preferably 27° or less. The lower limit for the electrolyte solution contact angle may, for example, be 20° or more. When the electrolyte solution contact angle of the particulate polymer is not more than any of the upper limits set forth above, affinity of a functional layer with electrolyte solution is excellent, and electrolyte solution injectability of an obtained electrochemical device can be enhanced. Consequently, circulation of electrolyte solution inside of an electrochemical device increases, and retention of gas during primary charge/discharge of the electrochemical device can be inhibited, which makes it possible to enhance storage characteristics of the electrochemical device and increase initial charge capacity.

The electrolyte solution contact angle of the particulate polymer can be controlled by adjusting the type and proportion of a unit included as the repeating unit X, for example.

### «Volume-average particle diameter of particulate polymer»

The volume-average particle diameter of the particulate polymer is required to be not less than 1.0 µm and not more than 10.0 µm, is preferably 2 µm or more, and more preferably 3 µm or more, and is preferably 9 µm or less, and more preferably 8 µm or less. When the volume-average particle diameter of the particulate polymer is within any of the ranges set forth above, process adhesiveness of an obtained functional layer can be further increased. Although the reason for this is not clear, it is thought that when the volume-average particle diameter of the particulate polymer is not less than any of the lower limits set forth above, a portion of the particulate polymer can be caused to protrude from the surface of a functional layer, thereby enabling higher process adhesiveness at the functional layer surface. It is also thought that when the volume-average particle diameter of the particulate polymer is not more than any of the upper limits set forth above, detachment of the particulate polymer from a functional layer during formation of the functional layer can be inhibited, and process adhesiveness of the obtained functional layer can be increased.

Note that the volume-average particle diameter of the particulate polymer can be adjusted through the type and amount of a metal hydroxide used in production of the particulate polymer, for example.

### «Degree of swelling in electrolyte solution of particulate polymer»

The degree of swelling in electrolyte solution of the particulate polymer is preferably 150% or more, more preferably 160% or more, and even more preferably 180% or more, and is preferably 1,200% or less, more preferably 1,000% or less, even more preferably 800% or less, and particularly preferably 500% or less. When the degree of swelling in electrolyte solution of the particulate polymer is not less than any of the lower limits set forth above, the particulate polymer swells to a suitable degree in electrolyte solution, and adhesiveness displayed by a functional layer after immersion in electrolyte solution can be increased. Moreover, when the degree of swelling in electrolyte solution of the particulate polymer is not more than any of the upper limits set forth above, internal resistance of an electrochemical device can be restricted from increasing because the particulate polymer does not excessively swell in electrolyte solution, and, as a result, output characteristics can be enhanced.

Note that the degree of swelling in electrolyte solution of the particulate polymer can be measured according to a method described in the EXAMPLES section of the present specification. Moreover, the degree of swelling in electrolyte solution of the particulate polymer can be controlled by adjusting the chemical compositions of the polymers forming the particulate polymer, for example.

### [Production of particulate polymer]

The particulate polymer can be produced through polymerization of a monomer composition that contains the monomers described above, carried out in an aqueous solvent such as water, for example. The proportion constituted by each monomer in the monomer composition is normally the same as the proportion constituted by each monomer unit in the particulate polymer.

The method of polymerization is not specifically limited and may, for example, be suspension polymerization, emulsion polymerization and aggregation, pulverization, or the like. Of these methods, suspension polymerization and emulsion polymerization and aggregation are preferable, and suspension polymerization is more preferable. The polymerization reaction may be radical polymerization, living radical polymerization, or the like.

### [Other compounding agents]

The monomer composition used in production of the particulate polymer may have other compounding agents such as chain transfer agents, polymerization regulators, polymerization reaction retardants, reactive fluidizers, fillers, flame retardants, antioxidants, and colorants compounded therewith in any amount.

The following describes, as one example, a method of producing the particulate polymer by suspension polymerization.

### [Production of particulate polymer by suspension polymerization]

### (1) Production of monomer composition

First, a monomer composition (A) having a chemical composition corresponding to the chemical composition of the polymer A of the core portion and a monomer composition (B) having a chemical composition corresponding to the chemical composition of the polymer B of the shell portion are prepared. In this preparation, various monomers are compounded in accordance with the chemical compositions of the polymer A and the polymer B, and other compounding agents that are added as necessary are also mixed therewith.

### (2) Formation of droplets

Next, the monomer composition (A) is dispersed in water, a polymerization initiator is added, and then droplets of the monomer composition (A) are formed. No specific limitations are placed on the method by which the droplets are formed. For example, the droplets may be formed by performing shear stirring of water containing the monomer composition (A) using a disperser such as an emulsifying/dispersing device.

The polymerization initiator that is used may be an oil-soluble polymerization initiator such as t-butyl peroxy-2-ethylhexanoate or azobisisobutyronitrile, for example. Note that the polymerization initiator may be added after dispersion of the monomer composition (A) in water and before formation of droplets, or may be added to the monomer composition (A) before dispersion in water.

From a viewpoint of stabilizing droplets of the monomer composition (A) formed in water, it is preferable that a dispersion stabilizer is added to the water and that droplets of the monomer composition (A) are then formed. The dispersion stabilizer may be sodium dodecylbenzenesulfonate, a metal hydroxide such as magnesium hydroxide, or the like, for example.

### (3) Polymerization

Once droplets of the monomer composition (A) have been formed, the water containing the formed droplets is heated so as to initiate polymerization. At a stage at which the polymerization conversion rate is sufficiently high, the monomer composition (B) is added, and polymerization is continued so as to form a particulate polymer having a core-shell structure in the water. The reaction temperature during polymerization is preferably not lower than 50°C and not higher than 95°C. Moreover, the reaction time during polymerization is preferably not less than 1 hour and not more than 10 hours, and is preferably 8 hours or less, and more preferably 6 hours or less.

### (4) Washing, filtration, dehydration, and drying step

Once polymerization has ended, the water containing the particulate polymer may be subjected to washing, filtration, and drying by standard methods to obtain the particulate polymer having a core-shell structure.

Note that in the present example, the monomer composition (B) is continuously added into the same polymerization system as the monomer composition (A) in order to form the core-shell structure in the step described above in (3) (i.e., core-shell structure formation is performed through subsequent monomer addition). However, the production method of the particulate polymer having a core-shell structure is not limited to the above-described example. For example, the monomer composition (B) may be polymerized first to obtain the polymer B, and then the polymer B may be dissolved in a solution containing the monomer composition (A), the same step as described above in (2) may be performed to form droplets containing the polymer B and the monomer composition (A), and water containing the formed droplets may subsequently be heated so as to initiate polymerization. The polymerization conditions can be the same as the conditions in the step described above in (3). The same step as described above in (4) may then be performed, during which, the polymer B undergoes phase separation to form a shell portion, thereby making it possible to obtain a particulate polymer having a core-shell structure (i.e., core-shell structure formation is performed through phase separation). Note that polyvinyl alcohol or the like may be added as a dispersion stabilizer when the monomer composition (B) is polymerized to obtain the polymer B.

Of these production methods, the previously described method in which "the monomer composition (B) is continuously added into the same polymerization system as the monomer composition (A) in order to form the core-shell structure in the step in (3)" is preferable from a viewpoint of simplicity.

With regards to the quantitative ratio of the monomer composition (A) and the monomer composition (B), the total mass of all monomers contained in the monomer composition (B) is preferably not less than 1 part by mass and not more than 200 parts by mass when the total mass of all monomers contained in the monomer composition (A) is taken to be 100 parts by mass. In other words, the mass of the polymer B forming the shell portion of the particulate polymer is preferably not less than 1 part by mass and not more than 200 parts by mass when the mass of the polymer A forming the core portion of the particulate polymer is taken to be 100 parts by mass.

### <Binder>

The binder binds the heat-resistant fine particles to one another in a functional layer. The binder may be a known polymer that is used as a binder such as a conjugated diene polymer, an acrylic polymer, polyvinylidene fluoride (PVDF), or polyvinyl alcohol (PVOH), for example. One binder may be used individually, or two or more binders may be used in combination. The binder is preferably a water-insoluble polymer such as a conjugated diene polymer, an acrylic polymer, or polyvinylidene fluoride (PVDF) that can be dispersed in a dispersion medium such as water, is more preferably a conjugated diene polymer or an acrylic polymer, and is even more preferably an acrylic polymer.

Note that when a polymer is said to be "water-insoluble" in the present disclosure, this means that when 0.5 g of the polymer is dissolved in 100 g of water at a temperature of 25°C, insoluble content is 90 mass% or more.

The term "conjugated diene polymer" as used here refers to a polymer that includes a conjugated diene monomer unit. Specific examples of conjugated diene polymers include, but are not specifically limited to, copolymers that include an aromatic vinyl monomer unit and an aliphatic conjugated diene monomer unit such as styrene-butadiene copolymer (SBR); butadiene rubber (BR); acrylic rubber (NBR) (copolymer including an acrylonitrile unit and a butadiene unit); and hydrogenated products thereof.

Moreover, the term "acrylic polymer" refers to a polymer that includes a (meth)acrylic acid ester monomer unit.

Note that one of these binders may be used individually, or two or more of these binders may be used in combination in a freely selected ratio.

An acrylic polymer that can preferably be used as the binder may, for example, be a polymer that includes a cross-linkable monomer unit such as previously described, a (meth)acrylic acid ester monomer unit such as described below, and an acidic group-containing monomer unit such as described below, but is not specifically limited thereto.

Examples of (meth)acrylic acid ester monomers that can be used to form a (meth)acrylic acid ester monomer unit include (meth)acrylic acid ester monomers including an alkyl group having a carbon number of 4 or more such as previously described and also include methyl acrylate, ethyl acrylate, n-propyl acrylate, isopropyl acrylate, methyl methacrylate, ethyl methacrylate, n-propyl methacrylate, isopropyl methacrylate, and the like.

Examples of acid group-containing monomers that can form an acidic group-containing monomer unit include carboxy group-containing monomers, sulfo group-containing monomers, phosphate group-containing monomers, and hydroxy group-containing monomers.

Examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" is used to indicate "allyl" and/or "methallyl", whereas "(meth)acryl" is used to indicate "acryl" and/or "methacryl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acid group-containing monomers may be used individually, or two or more of these acid group-containing monomers may be used in combination in a freely selected ratio.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. Through the proportion constituted by (meth)acrylic acid ester monomer units being not less than the lower limit of any of the ranges set forth above, adhesiveness of a functional layer can be increased. Moreover, through the proportion being not more than any of the upper limits set forth above, electrochemical characteristics of an electrochemical device that includes a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. Through the proportion constituted by cross-linkable monomer units being not less than any of the lower limits set forth above, electrochemical characteristics of an electrochemical device that includes a functional layer can be further enhanced. Moreover, through the proportion constituted by cross-linkable monomer units being not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. Through the proportion constituted by acid group-containing monomer units being not less than any of the lower limits set forth above, dispersibility of the binder in the composition for a functional layer and in a functional layer can be increased, and electrochemical characteristics of an electrochemical device that includes a functional layer can be sufficiently enhanced. Moreover, through the proportion constituted by acid group-containing monomer units being not more than any of the upper limits set forth above, residual water content in a functional layer can be reduced, and electrochemical characteristics of an electrochemical device can be sufficiently enhanced.

Note that the acrylic polymer may also include other monomer units.

### «Glass-transition temperature of binder»

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, adhesiveness and strength of the binder can be increased. On the other hand, when the glass-transition temperature of the binder is not higher than any of the upper limits set forth above, flexibility of a functional layer can be increased.

### [Content of binder]

The content of the binder is preferably 0.1 parts by mass or more, more preferably 0.2 parts by mass or more, and even more preferably 0.5 parts by mass or more per 100 parts by mass, in total, of the heat-resistant fine particles and the particulate polymer, and is preferably 20 parts by mass or less, more preferably 15 parts by mass or less, and even more preferably 10 parts by mass or less per 100 parts by mass, in total, of the heat-resistant fine particles and the particulate polymer. When the content of the binder is not less than any of the lower limits set forth above, detachment of the particulate polymer from a functional layer can be sufficiently prevented, and adhesiveness of the functional layer can be sufficiently increased. On the other hand, when the content of the binder is not more than any of the upper limits set forth above, reduction of ion conductivity of a functional layer can be inhibited, and deterioration of output characteristics of an electrochemical device can be inhibited.

The binder can be produced through polymerization of a monomer composition that contains the monomers described above, carried out in an aqueous solvent such as water, for example, but is not specifically limited to being produced in this manner. The proportion constituted by each monomer in the monomer composition is normally the same as the proportion constituted by each monomer unit in the binder.

The polymerization method and the polymerization reaction are not specifically limited and may, for example, be any of the polymerization methods and polymerization reactions given as examples for the polymerization method of the previously described particulate polymer.

Moreover, although the binder may have a particulate form or may have a non-particulate form, it is preferable that the binder has a particulate form from a viewpoint that detachment of components contained in a functional layer can be inhibited well.

### <<Heat-resistant fine particles>>

The heat-resistant fine particles that are contained in the functional layer are not specifically limited and may be fine particles formed of an inorganic material (i.e., inorganic fine particles) or fine particles formed of an organic material (i.e., organic fine particles) that are electrochemically stable and are stably present in the environment of use of an electrochemical device.

Note that inorganic fine particles may be used by themselves or organic fine particles may be used by themselves as the heat-resistant fine particles, or inorganic fine particles and organic fine particles may be used in combination as the heat-resistant fine particles.

### [Inorganic fine particles]

Examples of inorganic fine particles include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, or the like as necessary. Note that one type of inorganic fine particles may be used individually, or two or more types of inorganic fine particles may be used in combination.

### [Organic fine particles]

The organic fine particles are fine particles formed of a polymer that does not display adhesiveness and differ from the specific particulate polymer and the binder that were previously described.

Examples of organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamide imide, melamine resin, phenolic resin, and benzoguanamine-formaldehyde condensate; particles of heat-resistant polymers such as polysulfone, polyacrylonitrile, polyaramid, polyacetal, and thermoplastic polyimide; and modified products and derivatives of any of the preceding examples. One type of organic fine particles may be used individually, or two or more types of organic fine particles may be used in combination.

Note that the organic fine particles are formed of a polymer that does not display adhesiveness as previously described. Specifically, the polymer forming the organic fine particles preferably has a glass-transition temperature of 150°C or higher.

Of the heat-resistant fine particles described above, inorganic fine particles or organic fine particles formed of a polymer having a glass-transition temperature of 150°C or higher are preferable from a viewpoint of further improving heat resistance of a device member formed of a laminate, inorganic fine particles are more preferable, and particles formed of alumina (alumina particles), particles formed of boehmite (boehmite particles), particles formed of barium sulfate (barium sulfate particles), or particles formed of magnesium hydroxide (magnesium hydroxide particles) are even more preferable.

### [Properties of heat-resistant fine particles]

The volume-average particle diameter of the heat-resistant fine particles is preferably 0.1 µm or more, more preferably 0.2 µm or more, and even more preferably 0.3 µm or more, and is preferably 1.0 µm or less, more preferably 0.9 µm or less, and even more preferably 0.8 µm or less. When the volume-average particle diameter of the heat-resistant fine particles is 0.1 µm or more, it is possible to inhibit reduction of ion conductivity of a functional layer caused by excessively dense packing of the heat-resistant fine particles in a functional layer and to cause an electrochemical device to display excellent output characteristics. On the other hand, when the volume-average particle diameter of the heat-resistant fine particles is 1.0 µm or less, it is possible to cause a device member that is formed of a laminate including a functional layer to sufficiently display excellent heat resistance even in a situation in which the thickness of the functional layer is reduced. Consequently, heat resistance of the device member can be sufficiently ensured while also increasing the capacity of an electrochemical device.

### <Relationship between bulk specific gravity α of particulate polymer and bulk specific gravity β of heat-resistant fine particles>

With regards to a relationship between bulk specific gravity α of the particulate polymer and bulk specific gravity β of the heat-resistant fine particles, the value of β/α is preferably more than 1, more preferably 2 or more, and even more preferably 3 or more, and is preferably 5 or less. When the value of β/α is more than 1, the heat-resistant fine particles have a relatively high tendency to sink compared to the particulate polymer, which makes it possible to cause good protrusion of the particulate polymer at the surface of a functional layer, and thereby further increase process adhesiveness of the functional layer. Moreover, when the value of β/α is not more than any of the upper limits set forth above, it is possible to inhibit uneven distribution of the heat-resistant fine particles and the particulate polymer inside a functional layer, to increase uniformity of the functional layer, and to suppress an increase of internal resistance and enhance output characteristics of an obtained electrochemical device.

### <Mixing ratio of heat-resistant fine particles and particulate polymer>

The mixing ratio of the heat-resistant fine particles and the particulate polymer in the composition for a functional layer is, in terms of volume ratio (heat-resistant fine particles:particulate polymer), preferably 95:5 to 55:45, more preferably 80:20 to 55:45, even more preferably 75:25 to 60:40, and particularly preferably 70:30 to 65:35. When the mixing ratio of the heat-resistant fine particles and the particulate polymer is a volume ratio that is within any of the ranges set forth above, this results in a better balance of heat resistance and adhesiveness of a functional layer.

### <Other components>

The composition for a functional layer may contain any other components besides the components described above. These other components are not specifically limited so long as they do not affect electrochemical reactions in an electrochemical device, and examples thereof include known additives such as dispersants, viscosity modifiers, and wetting agents. One of these other components may be used individually, or two or more of these other components may be used in combination.

### <Production method of composition for electrochemical device functional layer>

No specific limitations are placed on the method by which the composition for a functional layer is produced. For example, the composition for a functional layer can be produced by mixing the above-described particulate polymer, binder, heat-resistant fine particles, water as a dispersion medium, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

The specific particulate polymer described above is preferably premixed with a dispersant such as a nonionic surfactant, an anionic surfactant, a cationic surfactant, or an amphoteric surfactant prior to being mixed with the heat-resistant fine particles and the binder. Of these examples, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; alkylbenzene sulfonic acid salts such as sodium dodecylbenzenesulfonate, sodium laurylbenzenesulfonate, and sodium hexadecylbenzenesulfonate; and aliphatic sulfonic acid salts such as sodium laurylsulfonate, sodium dodecylsulfonate, and sodium tetradecylsulfonate. The amount of the dispersant relative to 100 parts by mass of the particulate polymer is preferably 0.01 parts by mass or more, more preferably 0.05 parts by mass or more, and even more preferably 0.1 parts by mass or more, and is preferably 0.5 parts by mass or less, more preferably 0.4 parts by mass or less, and even more preferably 0.3 parts by mass or less. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, it is possible to suppress an increase of internal resistance and inhibit deterioration of output characteristics of an obtained electrochemical device.

### (Laminate for electrochemical device)

The laminate for an electrochemical device includes a substrate and a functional layer for an electrochemical device formed on the substrate using the composition for a functional layer set forth above. The functional layer for an electrochemical device contains at least the above-described particulate polymer, binder, and heat-resistant fine particles and also other components that are used as necessary. Note that components contained in the functional layer are components that were contained in the composition for a functional layer set forth above, and the preferred ratio of these components is the same as the preferred ratio of the components in the composition for a functional layer. As a result of the laminate for an electrochemical device including a functional layer that is formed using the composition for a functional layer set forth above, the laminate for an electrochemical device has excellent process adhesiveness, and it is possible to enhance electrolyte solution injectability and storage characteristics of an electrochemical device obtained using this laminate.

### <Substrate>

The substrate may be selected as appropriate depending of the type of electrochemical device member for which the presently disclosed laminate is used. For example, in a case in which the presently disclosed laminate is used as a separator, a separator substrate is used as the substrate. Moreover, in a case in which the presently disclosed laminate is used as an electrode, for example, an electrode substrate is used as the substrate.

### <<Separator substrate>>

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.

Of these separator substrates, a microporous membrane formed of a polyolefinic resin is preferable from a viewpoint that this makes it possible to increase the ratio of electrode active material in an electrochemical device and to increase the volumetric capacity of the electrochemical device.

Although the separator substrate may be of any thickness, the thickness thereof is preferably not less than 5 µm and not more than 30 µm, more preferably not less than 5 µm and not more than 20 µm, and even more preferably not less than 5 µm and not more than 18 µm.

### «Electrode substrate»

The electrode substrate (positive/negative electrode substrate) is not specifically limited and may, for example, be an electrode substrate obtained by forming an electrode mixed material layer on a current collector.

The current collector, an electrode active material (positive/negative electrode active material) and a binder for an electrode mixed material layer (binder for positive/negative electrode mixed material layer) in the electrode mixed material layer, and the method by which the electrode mixed material layer is formed on the current collector may be known examples thereof such as those described in JP2013-145763A, for example.

### <Production method of laminate>

No specific limitations are placed on the method by which the presently disclosed laminate is produced. For example, a method in which a functional layer is formed on a releasable sheet and then this functional layer is transferred onto the substrate may be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

### «Supply step»

In the supply step, the presently disclosed composition for a functional layer set forth above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this facilitates control of thickness of the produced functional layer.

Examples of methods by which the composition for a functional layer may be applied onto the substrate include, but are not specifically limited to, doctor blading, reverse roll coating, direct roll coating, gravure coating, bar coating, extrusion coating, and brush coating.

Note that in the supply step, a coating film of the composition for a functional layer may be formed at just one side of the substrate or coating films of the composition for a functional layer may be formed at both sides of the substrate.

### <<Drying step>>

In the drying step, the coating film of the composition for a functional layer that has been formed on the substrate in the supply step is dried so as to remove the dispersion medium and form a functional layer.

The coating film of the composition for a functional layer may be dried by any commonly known method without any specific limitations. Examples of drying methods that may be used include drying by warm, hot, or low-humidity air; drying in a vacuum; and drying by irradiation with infrared light, an electron beam, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate so as to form a functional layer, and then the supply step and the drying step may be further performed with respect to the other side of the substrate so as to form a functional layer.

The functional layer that is formed using the composition for a functional layer normally has a plurality of heat-resistant fine particles stacked in a thickness direction of the functional layer. The thickness of a layer formed through stacking of heat-resistant fine particles in the thickness direction of the functional layer (hereinafter, also referred to as a "heat-resistant fine particle layer") is preferably 0.5 µm or more, more preferably 0.8 µm or more, and even more preferably 1 µm or more, and is preferably 6 µm or less, more preferably 5 µm or less, and even more preferably 4 µm or less. When the thickness of the heat-resistant fine particle layer is not less than any of the lower limits set forth above, the functional layer has extremely good heat resistance. On the other hand, when the thickness of the heat-resistant fine particle layer is not more than any of the upper limits set forth above, ion diffusivity of the functional layer can be ensured, and output characteristics of an electrochemical device can be further enhanced.

### (Electrochemical device)

The presently disclosed electrochemical device includes electrodes and a separator, and a feature thereof is that it includes the presently disclosed laminate set forth above as at least one of an electrode and a separator. The presently disclosed electrochemical device has excellent electrolyte solution injectability and storage characteristics as a result of the presently disclosed laminate set forth above being used as at least one device member among an electrode and a separator.

The presently disclosed electrochemical device may be, but is not specifically limited to, a lithium ion secondary battery, an electric double-layer capacitor, or a lithium ion capacitor, and is preferably a lithium ion secondary battery.

Although the following description gives a lithium ion secondary battery as one example of the presently disclosed electrochemical device and describes a case in which the presently disclosed laminate set forth above is used as a separator of the lithium ion secondary battery, the presently disclosed electrochemical device is not limited to the following example.

### <Positive electrode and negative electrode>

An electrode that is formed of a known electrode substrate (positive electrode substrate or negative electrode substrate) such as previously described in the "Substrate" section can be used as a positive electrode or negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li are preferable because they readily dissolve in solvents and exhibit a high degree of dissociation. Note that one electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these organic solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, measurements and evaluations of various attributes were performed as follows.

### <Glass-transition temperature>

A measurement sample was prepared as described below for a particulate polymer having a core-shell structure produced in each example or comparative example. With regards to each of a polymer of a core portion and a polymer of a shell portion in the particulate polymer having a core-shell structure, a water dispersion of the polymer (polymer of core portion or polymer of shell portion) that was to serve as a measurement sample was produced through the same polymerization conditions as for the core portion or shell portion using the monomers, various additives, and so forth that were used in formation of the core portion or shell portion. The produced water dispersion was then dried to obtain a measurement sample. In the case of a binder produced in each example or comparative example, the binder was dried to obtain a measurement sample. The measurement sample was weighed into an aluminum pan in an amount of 10 mg and was then measured under conditions prescribed by JIS Z 8703 with a measurement temperature range of -100°C to 500°C and a heating rate of 10°C/min, and with an empty aluminum pan as a reference, using a differential scanning calorimeter (EXSTAR DSC6220 produced by SII NanoTechnology Inc.) so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

### <Volume-average particle diameter>

### «Volume-average particle diameter of particulate polymer»

A particulate polymer produced in each example or comparative example was used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and 3 minutes of dispersing was performed using a 20 W (Watt) ultrasonic disperser. Thereafter, the volume-average particle diameter (Dv) of the measurement sample was measured using a particle diameter analyzer (Multisizer produced by Beckman Coulter, Inc.) under conditions of an aperture diameter of 20 µm, a medium of ISOTON II, and a measured particle count of 100,000.

### «Volume-average particle diameter of binder»

The volume-average particle diameter of a binder produced in each example was measured by laser diffraction. Specifically, a produced aqueous solution containing the binder (adjusted to solid content concentration of 0.1 mass%) was used as a sample. In a particle diameter distribution (by volume) measured using a laser diffraction particle size analyzer (LS-230 produced by Beckman Coulter, Inc.), the particle diameter D50 at which cumulative volume calculated from the small diameter end of the distribution reached 50% was taken to be the volume-average particle diameter.

### <Electrolyte solution contact angle of particulate polymer>

A particulate polymer-containing water dispersion obtained by dispersing a core-shell particulate polymer produced in each example or comparative example in deionized water was applied onto a separator substrate to form a layer formed of the particulate polymer on the separator substrate. The resultant product was used as a test sample. A contact angle meter (PCA-1 produced by Kyowa Interface Science Co., Ltd.) was used to drip 2 µL of electrolyte solution (EC:EMC = 25:75 (volume ratio) + LiPF₆ (1 mol/L)) onto the surface of the layer formed of the particulate polymer in the test sample and to measure the contact angle (°) 1 second after dripping. This measurement was repeated 10 times, and an average value was adopted as a value for the contact angle.

### <Degree of swelling in electrolyte solution of particulate polymer>

A particulate polymer-containing water dispersion obtained by dispersing a particulate polymer produced in each example or comparative example in deionized water was loaded into a petri dish made of polytetrafluoroethylene. The water dispersion in the petri dish was dried at a temperature of 25°C for 48 hours to obtain a powdered sample. Approximately 0.2 g of the sample was pressed at a temperature of 200°C and a pressure of 5 MPa for 2 minutes to obtain a test specimen. The weight of the obtained test specimen was measured and was taken to be W0.

Next, the obtained test specimen was immersed in electrolyte solution (EC:EMC = 25:75 (volume ratio) + LiPF₆ (1 mol/L)) at a temperature of 60°C for 72 hours.

After this immersion, the test specimen was removed from the electrolyte solution, and electrolyte solution on the surface of the test specimen was wiped off. The weight of the test specimen after immersion was measured and was taken to be W1. The measured weights W0 and W1 were used to calculate the degree of swelling in electrolyte solution S (mass%) as S = (W1/W0) × 100.

### <Thickness of heat-resistant fine particle layer>

A cross-section of a functional layer-equipped separator was observed using a field emission scanning electron microscope (FE-SEM), and the thickness of a heat-resistant fine particle layer was calculated from an obtained image. Note that the thickness of the heat-resistant fine particle layer was taken to be the vertical direction distance from a surface of the separator at a side at which the functional layer was formed to heat-resistant fine particles forming a surface of the functional layer.

### <Mixing ratio of heat-resistant fine particles and particulate polymer>

The mixing ratio (volume ratio) of heat-resistant fine particles and a particulate polymer was determined from the charged amounts of inorganic particles (alumina) serving as the heat-resistant fine particles and the particulate polymer in production of a composition for a functional layer. Note that the density of alumina was taken to be 4 g/cm³ in this calculation.

### <Bulk specific gravity>

A 100 mL graduated cylinder that had been weighed in advance was gradually loaded with 50 g of a particulate polymer or heat-resistant fine particles that were to be measured. After the addition, the graduated cylinder was vibrated 100 times, the mass inclusive of the graduated cylinder was measured, and the difference in mass between before and after addition of contents was calculated. In addition, the volume after vibration was measured, the mass per 1 L was calculated, and this was taken to be the bulk specific gravity (g/L) of the contents.

### <Process adhesiveness of functional layer>

A positive electrode and a functional layer-equipped separator produced in each example or comparative example were each cut out as 10 mm in width and 50 mm in length. The positive electrode and the functional layer-equipped separator were then stacked and were pressed by roll pressing under conditions of a temperature of 70°C, a load of 10 kN/m, and a pressing rate of 30 m/min to obtain a joined product in which the positive electrode and the functional layer-equipped separator were joined together.

The obtained joined product was placed with the surface at the current collector-side of the positive electrode facing downward, and cellophane tape was affixed to the surface of the positive electrode. Tape prescribed by JIS Z1522 was used as the cellophane tape. Moreover, the cellophane tape was fixed to a horizontal test stage in advance. One end of the functional layer-equipped separator was subsequently pulled vertically upward at a pulling speed of 50 mm/min to peel off the functional layer-equipped separator, and the stress during this peeling was measured.

The stress was also measured for a negative electrode produced in each example or comparative example by performing the same operations as when the positive electrode was used.

The stress measurement described above was performed a total of 6 times for three joined products of a positive electrode and a functional layer-equipped separator and three joined products of a negative electrode and a functional layer-equipped separator, an average value of the stresses was determined, and the obtained average value was taken to be the peel strength (N/m).

The calculated peel strength was used to evaluate process adhesiveness of an electrode and a functional layer-equipped separator by the following standard. A larger peel strength indicates higher process adhesiveness (i.e., higher adhesiveness of a battery member in a production process of a battery).
A: Peel strength of 3 N/m or more
B: Peel strength of not less than 2 N/m and less than 3 N/m
C: Peel strength of not less than 1 N/m and less than 2 N/m
D: Peel strength of less than 1 N/m

### <Adhesiveness of functional layer in electrolyte solution>

A negative electrode and a functional layer-equipped separator produced in each example or comparative example were each cut out as 10 mm in width and 50 mm in length. The negative electrode and the functional layer-equipped separator were stacked such that the surface at the negative electrode mixed material layer-side was facing toward the functional layer-equipped separator, were pressed at a pressing rate of 30 m/min by roll pressing with a temperature of 70°C and a load of 10 kN/m, and were subsequently immersed in electrolyte solution and then left for 24 hours to obtain a test specimen.

Thereafter, the test specimen was taken out of the electrolyte solution, a film made of polyethylene terephthalate (PET) that was for preventing electrolyte solution evaporation was placed at the separator-side of the test specimen, the test specimen was placed with the surface at the current collector-side of the negative electrode facing downward, and cellophane tape was affixed to the surface of the electrode. Tape prescribed by JIS Z1522 was used as the cellophane tape. Moreover, the cellophane tape was fixed to a horizontal test stage in advance. One end of the separator substrate was pulled vertically upward at a pulling speed of 50 mm/min to peel off the separator substrate, and the stress during this peeling was measured.

Three measurements were made in this manner. An average value of the stresses obtained in these three measurements was determined as the peel strength (N/m) and was evaluated by the following standard as the adhesiveness of the functional layer in electrolyte solution. A larger peel strength indicates that the functional layer has better adhesiveness in electrolyte solution.
A: Peel strength of 0.45 N/m or more
B: Peel strength of not less than 0.30 N/m and less than 0.45 N/m
C: Peel strength of not less than 0.15 N/m and less than 0.30 N/m
D: Peel strength of less than 0.15 N/m

### <Electrolyte solution injectability of electrochemical device>

Electrolyte solution was injected into a lithium ion secondary battery produced in each example or comparative example. A state in which the inside of the lithium ion secondary battery was depressurized to -100 kPa was maintained for 1 minute. Thereafter, heat sealing was performed. After 10 minutes, an electrode (positive electrode) was dismantled, and the impregnation state of electrolyte solution in the electrode was visually confirmed. An evaluation was made by the following standard. A greater portion of the electrode impregnated with electrolyte solution indicates higher electrolyte solution injectability.
A: Entire surface of electrode impregnated with electrolyte solution
B: Portion of less than 1 cm² in electrode remains unimpregnated with electrolyte solution (excluding case in which entire surface is impregnated)
C: Portion of 1 cm² or more in electrode remains unimpregnated with electrolyte solution

### <Cycle characteristics of electrochemical device>

A lithium ion secondary battery produced in each example or comparative example was left at rest at a temperature of 25°C for 5 hours. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1^{st} cycle was defined as X1, and the discharge capacity of the 100^{th} cycle was defined as X2.

The discharge capacity X1 and the discharge capacity X2 were used to determine a capacity maintenance rate ΔC' (= (X2/X1) × 100(%)) that was then evaluated by the following standard. A larger value for the capacity maintenance rate ΔC' indicates that the secondary battery has better cycle characteristics.
A: Capacity maintenance rate ΔC' of 93% or more
B: Capacity maintenance rate ΔC' of not less than 90% and less than 93%
C: Capacity maintenance rate ΔC' of less than 90%

### <Output characteristics of electrochemical device>

A lithium ion secondary battery produced in each example or comparative example was constant-current constant-voltage (CCCV) charged to 4.3 V in an atmosphere having a temperature of 25°C for cell preparation. The prepared cell was discharged to 3.0 V by 0.2C and 1.5C constant-current methods, and the electric capacities thereof were determined. A discharge capacity maintenance rate expressed by the ratio of the electric capacities [= (electric capacity at 1.5C/electric capacity at 0.2C) × 100(%)] was determined. This measurement was performed for 5 lithium ion secondary battery cells. An average value of the discharge capacity maintenance rates of the cells was determined and was evaluated by the following standard. A larger average value for the discharge capacity maintenance rate indicates that the secondary battery has better output characteristics.
A: Average value for discharge capacity maintenance rate of 90% or more
B: Average value for discharge capacity maintenance rate of not less than 85% and less than 90%
C: Average value for discharge capacity maintenance rate of not less than 75% and less than 85%
D: Average value for discharge capacity maintenance rate of less than 75%

### <Storage characteristics of electrochemical device>

A lithium ion secondary battery produced in each example or comparative example was constant-current constant-voltage (CC-CV) charged to 4.2 V and was discharged to 3.0 V by a 0.2C constant-current method in a constant-temperature tank set to a temperature of 25°C so as to determine the discharge capacity C1. The lithium ion secondary battery was then CC-CV charged to 4.2 V once again. Thereafter, the lithium ion secondary battery was stored for 1 month in a constant-temperature tank in which the temperature had been raised to 60°C. The temperature of the constant-temperature tank was then lowered to 25°C, and 2 hours of heat removal was performed. The lithium ion secondary battery was subsequently 0.2C constant-current discharged to 3.0 V, was then CC-CV charged by a 0.2C constant-current method (upper limit cell voltage: 4.20 V) once again, and was then CC discharged to 3.0 V by a 0.2C constant-current method so as to determine the discharge capacity C2. A value for a discharge capacity maintenance rate (= C2/C1 × 100) was calculated, and storage characteristics of the electrochemical device were evaluated by the following standard. A larger value for the discharge capacity maintenance rate indicates that the electrochemical device has better storage characteristics.
A: Storage characteristic of 93% or more
B: Storage characteristic of not less than 90% and less than 93%
C: Storage characteristic of not less than 87% and less than 90%
D: Storage characteristic of less than 87%

### (Example 1)

### <Production of core-shell particulate polymer by subsequent monomer addition>

### [Production of monomer composition (A)]

A monomer composition (A) was produced by mixing 80 parts of styrene as an aromatic vinyl monomer, 19.9 parts of 2-ethylhexyl acrylate as a (meth)acrylic acid ester monomer, and 0.1 parts of ethylene glycol dimethacrylate as a cross-linkable monomer.

### [Production of monomer composition (B)]

A monomer composition (B) was produced by mixing 50 parts of styrene as an aromatic vinyl monomer and 50 parts of glycidyl methacrylate.

### [Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

### [Suspension polymerization]

A particulate polymer was produced by suspension polymerization. Specifically, the monomer composition (A) obtained as described above was added to the colloidal dispersion liquid (A) containing magnesium hydroxide, was further stirred therewith, and then 2.0 parts of t-butyl peroxy-2-ethylhexanoate (PERBUTYL^{®} O (PERBUTYL is a registered trademark in Japan, other countries, or both) produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (A) in the colloidal dispersion liquid (A) containing magnesium hydroxide.

The magnesium hydroxide-containing colloidal dispersion liquid (A) in which droplets of the monomer composition (A) has been formed was loaded into a reactor, the temperature was raised to 90°C, and polymerization was initiated under heating. Polymerization was continued until the polymerization conversion rate reached 96% to yield a water dispersion containing a particulate polymer A forming a core portion. Next, at the point at which the polymerization conversion rate reached 96%, the monomer composition (B) was continuously added and polymerization was continued for shell portion formation. The reaction was quenched by cooling at the point at which the conversion rate reached 96% to yield a water dispersion containing a core-shell particulate polymer. Note that the additive amount of the monomer composition (B) (total mass of all monomers contained in the monomer composition (B)) that was added into the reactor was 100 parts when the total mass of all monomers contained in the monomer composition (A) was taken to be 100 parts.

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer. The obtained particulate polymer had a core-shell structure in which the outer surface of a core portion formed of a polymer A was partially covered by a shell portion formed of a polymer B.

The electrolyte solution contact angle, degree of swelling in electrolyte solution, and volume-average particle diameter of the obtained particulate polymer were measured. Moreover, the glass-transition temperatures of the polymer A of the core portion and the polymer B of the shell portion were measured. The results are shown in Table 1. The results are shown in Table 1.

### <Production of water dispersion containing binder (α)>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained particulate binder (α) had a volume-average particle diameter of 0.25 µm and a glass-transition temperature of -40°C.

### <Production of composition for functional layer>

A pre-mixing slurry was obtained by adding 0.5 parts of polyacrylic acid as a dispersant to 100 parts of alumina (AKP3000 produced by Sumitomo Chemical Co., Ltd.; volume-average particle diameter: 0.7 µm) as heat-resistant fine particles, further adding 5 parts in terms of solid content of the water dispersion containing the binder (α) and 1.5 parts of carboxymethyl cellulose as a thickener, adjusting the solid content concentration to 55% through addition of deionized water, and performing mixing using a ball mill.

A mixture was then obtained by adding 0.2 parts of sodium dodecylbenzenesulfonate (NEOPELEX G-15 produced by Kao Corporation) as a surfactant relative to 100 parts of the particulate polymer and performing mixing thereof such that the solid content concentration was 40%. This mixture was added to the pre-mixing slurry such that the mixing ratio (volume ratio) of the heat-resistant fine particles and the particulate polymer was a value indicated in Table 1. The solid content concentration was adjusted to 40% through addition of deionized water to yield a composition for a functional layer (slurry composition) in which the mixing ratio (volume ratio) of the heat-resistant fine particles and the particulate polymer was a value indicated in Table 1.

### <Production of functional layer-equipped separator>

A microporous membrane (thickness: 12 µm) made of polyethylene was prepared as a separator substrate. The composition for a functional layer obtained as described above was applied onto one side of the separator substrate by bar coating. Next, the separator substrate with the composition for a functional layer applied thereon was dried at 50°C for 1 minute to form a functional layer. The same operations were performed with respect to the other side of the separator substrate to produce a functional layer-equipped separator having functional layers at both sides of the separator substrate. In each of the functional layers, the thickness of a heat-resistant fine particle layer was 2.0 µm.

The electrolyte solution contact angle of the obtained functional layer-equipped separator was measured. The result is shown in Table 1.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

The functional layer-equipped separator, positive electrode, and negative electrode obtained as described above were used to evaluate the process adhesiveness and adhesiveness in electrolyte solution of a functional layer. The results are shown in Table 1.

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. The resultant laminate was wound by a winding machine to obtain a roll. This roll was pressed into a flattened form at 70°C and 1 MPa, was enclosed in an aluminum packing case serving as a battery case, and electrolyte solution (solvent: ethylene carbonate/diethyl carbonate/vinylene carbonate (volume ratio) = 68.5/30/1.5; electrolyte: LiPF₆ of 1 M in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate the electrolyte solution injectability, cycle characteristics, output characteristics, and storage characteristics of a secondary battery as an electrochemical device. The results are shown in Table 1.

### (Examples 2 and 3)

Various operations, measurements, and evaluations were performed in the same way as in Example 1 with the exception that in production of the core-shell particulate polymer, the chemical composition of the monomer composition (A) was changed so as to correspond to the chemical composition of the polymer A indicated in Table 1. The results are shown in Table 1.

### (Example 4)

A metal hydroxide produced as described below was used in production of the core-shell particulate polymer. Moreover, the composition for a functional layer was applied such that the thickness of each heat-resistant fine particle layer was a value indicated in Table 1 in production of the functional layer-equipped separator. With the exception of these points, various operations, measurements, and evaluations were performed in the same way as in Example 1. The results are shown in Table 1.

### [Production of metal hydroxide]

A colloidal dispersion liquid (A) containing magnesium hydroxide as a metal hydroxide was produced by gradually adding an aqueous solution (A2) of 8.4 parts of sodium hydroxide dissolved in 50 parts of deionized water to an aqueous solution (A1) of 12 parts of magnesium chloride dissolved in 200 parts of deionized water under stirring.

### (Example 5)

A metal hydroxide produced as described below was used in production of the core-shell particulate polymer. Moreover, the composition for a functional layer was applied such that the thickness of each heat-resistant fine particle layer was a value indicated in Table 1 in production of the functional layer-equipped separator. With the exception of these points, various operations, measurements, and evaluations were performed in the same way as in Example 1. The results are shown in Table 1.

### [Production of metal hydroxide]

A colloidal dispersion liquid (A) containing magnesium hydroxide as a metal hydroxide was produced by gradually adding an aqueous solution (A2) of 2.8 parts of sodium hydroxide dissolved in 50 parts of deionized water to an aqueous solution (A1) of 4 parts of magnesium chloride dissolved in 200 parts of deionized water under stirring.

### (Example 6)

Various operations, measurements, and evaluations were performed in the same way as in Example 1 with the exception that a core-shell particulate polymer produced as described below was used. The results are shown in Table 1.

### <Production of core-shell particulate polymer by phase separation>

A four-necked round-bottomed flask made of glass that included a stirrer was charged with 300 parts of water, and then 3 parts of polyvinyl alcohol as a dispersion stabilizer was dissolved therein. The solution was stirred by an impeller at 300 rpm while a monomer mixture of 50 parts of styrene and 50 parts of glycidyl methacrylate that was to form an outer layer and 4 parts of 2,2'-azobisisobutyronitrile as a polymerization initiator were added all at once to produce a suspension. The reaction system was heated to 80°C while continuing stirring, and was held constant while causing a reaction to occur for 4 hours. Cooling was subsequently performed to room temperature (approximately 25°C). Next, the reaction product was subjected to solid-liquid separation, was thoroughly washed with water, and was then dried at 70°C for 12 hours using a dryer to yield a copolymerized product of styrene and glycidyl methacrylate that was to form a shell portion.

Next, 100 parts of the copolymerized product was mixed with a monomer composition (A) of 80 parts of styrene, 19.9 parts of 2-ethylhexyl acrylate, and 0.1 parts of ethylene glycol dimethacrylate that was to form a core portion and was stirred therewith at room temperature for 12 hours to cause dissolution and yield a solution of monomers for forming a core portion in which the copolymerized product for forming a shell portion was dissolved. Operations from the "Production of metal hydroxide" section onwards in Example 1 were then performed in the same manner to obtain a core-shell particulate polymer.

### (Example 7)

Various operations, measurements, and evaluations were performed in the same way as in Example 1 with the exception that a binder (β) produced as described below was used. The results are shown in Table 1.

### <Production of water dispersion containing binder (β)>

A reactor including a stirrer was supplied with 70 parts of deionized water, 0.15 parts of polyoxyethylene lauryl ether (EMULGEN^{®} 120 (EMULGEN is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (β) was produced in a separate vessel by mixing 50 parts of deionized water, 0.5 parts of polyoxyethylene lauryl ether (EMULGEN^{®} 120 produced by Kao Corporation) as an emulsifier, 70 parts of 2-ethylhexyl acrylate as a (meth)acrylic acid alkyl ester monomer, 25 parts of styrene as an aromatic vinyl monomer, 1.7 parts of allyl glycidyl ether and 0.3 parts of allyl methacrylate as cross-linkable monomers, and 3 parts of acrylic acid as an acid group-containing monomer.

The obtained monomer composition (β) was continuously added into the reactor including a stirrer over 4 hours to perform polymerization. The reaction was carried out at 70°C during the addition. Once the addition was complete, a further 3 hours of stirring was performed at 80°C, and then the reaction was ended to yield a water dispersion containing a particulate binder (β). The obtained particulate binder (β) had a volume-average particle diameter of 0.3 µm and a glass-transition temperature of -35°C.

### (Comparative Example 1)

Various operations, measurements, and evaluations were performed in the same way as in Example 1 with the exception that a particulate polymer not having a core-shell structure that was produced as described below was used as the particulate polymer. The results are shown in Table 1.

### <Production of particulate polymer not having shell portion>

The magnesium hydroxide-containing colloidal dispersion liquid (A) in which droplets of the monomer composition (A) has been formed was loaded into a reactor, the temperature was raised to 90°C, and polymerization was initiated under heating. Polymerization was continued until the polymerization conversion rate reached 96% to yield a water dispersion containing a particulate polymer A forming a core portion. The reaction was quenched by cooling at the point at which the conversion rate reached 96% to obtain a water dispersion containing the particulate polymer.

The degree of swelling in electrolyte solution of the polymer A forming the core portion and the volume-average particle diameter of the obtained particulate polymer were measured. Moreover, the glass-transition temperature of the polymer A of the core portion was measured.

### (Comparative Example 2)

Various operations, measurements, and evaluations were performed in the same way as in Example 1 with the exception that a particulate polymer having a core-shell structure that was produced as described below was used as the particulate polymer. The results are shown in Table 1.

### <Production of particulate polymer>

In core portion formation, a 5 MPa pressure-resistant vessel equipped with a stirrer was charged with 19.9 parts of 2-ethylhexyl acrylate (2-EHA) as a (meth)acrylic acid ester monomer, 80 parts of styrene (ST) as an aromatic vinyl monomer, 0.1 parts of ethylene glycol dimethacrylate (EDMA) as a cross-linkable monomer, 1 part of sodium dodecylbenzenesulfonate as an emulsifier, 150 parts of deionized water, and 0.5 parts of potassium persulfate as a polymerization initiator. These materials were thoroughly stirred and were then heated to 60°C to initiate polymerization. Polymerization was continued until the polymerization conversion rate reached 96% to yield a water dispersion containing a particulate polymer A forming a core portion. Next, at the point at which the polymerization conversion rate reached 96%, 50 parts of styrene (ST) as an aromatic vinyl monomer and 50 parts of glycidyl methacrylate (GMA) were continuously added and polymerization was continued under heating to 70°C for shell portion formation. The reaction was quenched by cooling at the point at which the conversion rate reached 96% to yield a water dispersion containing a particulate polymer. The obtained particulate polymer had a core-shell structure in which the outer surface of a core portion formed of a polymer A was partially covered by a shell portion formed of a polymer B.

The degree of swelling in electrolyte solution of the polymer A forming the core portion and the volume-average particle diameter of the obtained particulate polymer were measured. Moreover, the glass-transition temperatures of the polymer A of the core portion and the polymer B of the shell portion were measured. The results are shown in Table 1.

### (Comparative Example 3)

Various operations, measurements, and evaluations were performed in the same way as in Example 1 with the exception that a monomer composition containing 100 parts of styrene was produced and used as the monomer composition (B) in production of the particulate polymer. The results are shown in Table 1.

Note that in Table 1:
"GMA" indicates glycidyl methacrylate;
"ST" indicates styrene;
"2EHA" indicates 2-ethylhexyl acrylate;
"EDMA" indicates ethylene glycol dimethacrylate;
"BA" indicates n-butyl acrylate;
"AN" indicates acrylonitrile;
"MAA" indicates methacrylic acid;
"MMA" indicates methyl methacrylate;
"AGE" indicates allyl glycidyl ether;
"AMA" indicates allyl methacrylate;
"AA" indicates acrylic acid; and
"SBR" indicates styrene-butadiene copolymer.

### [Table 1]

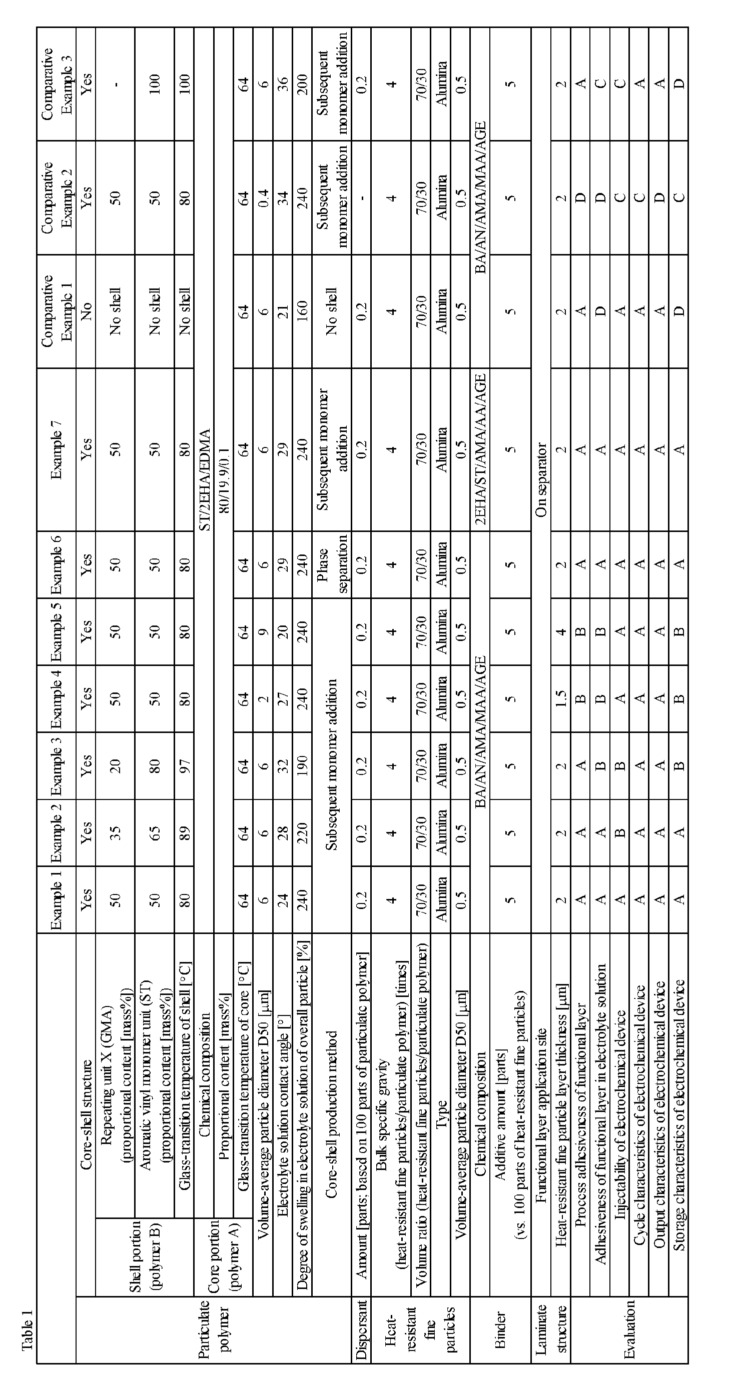

It can be seen from Table 1 that is was possible to produce a functional layer having excellent process adhesiveness and an electrochemical device having excellent electrolyte solution injectability and storage characteristics in Examples 1 to 7 in which the used composition for an electrochemical device functional layer contained a binder, heat-resistant fine particles, and a particulate polymer having a core-shell structure and having an electrolyte solution contact angle of not less than 0° and not more than 35° and a volume-average particle diameter of not less than 1.0 µm and not more than 10.0 µm. It can also be seen that process adhesiveness of a functional layer and electrolyte solution injectability and storage characteristics of an electrochemical device could not be sufficiently enhanced in Comparative Example 1 in which a particulate polymer not having a shell portion was used, Comparative Example 2 in which a particulate polymer having a volume-average particle diameter of less than 1.0 µm was used, and Comparative Example 3 in which a particulate polymer having an electrolyte solution contact angle of more than 35° was used.

### INDUSTRIAL APPLICABILITY

According to the present disclosure, it is possible to provide a composition for a functional layer with which it is possible to form a functional layer that has excellent process adhesiveness and can enhance electrolyte solution injectability and storage characteristics of an obtained electrochemical device.

Moreover, according to the present disclosure, it is possible to provide a laminate for an electrochemical device including a functional layer that has excellent process adhesiveness and can enhance electrolyte solution injectability and storage characteristics of an obtained electrochemical device, and also to provide an electrochemical device that includes this laminate for an electrochemical device and has excellent electrolyte solution injectability and storage characteristics.

## Claims

1. A composition for an electrochemical device functional layer comprising a particulate polymer, a binder, and heat-resistant fine particles, wherein
the particulate polymer has a core-shell structure including a core portion formed of a polymer A and a shell portion formed of a polymer B that at least partially covers an outer surface of the core portion, with the polymer A and the polymer B being different from each other, and
the particulate polymer has an electrolyte solution contact angle of not less than 0° and not more than 35° and a volume-average particle diameter of not less than 1.0 µm and not more than 10.0 µm.

2. The composition for an electrochemical device functional layer according to claim 1, wherein
the polymer B includes a repeating unit X that includes at least one among a nitrile group-containing monomer unit, an N-methylolamide group-containing monomer unit, and an epoxy group-containing unsaturated monomer unit, and
proportional content of the repeating unit X in the polymer B is not less than 0.1 mass% and not more than 60 mass%.

3. The composition for an electrochemical device functional layer according to claim 1 or 2, wherein the particulate polymer has a degree of swelling in electrolyte solution of not less than 150 mass% and not more than 1,200 mass%.

4. The composition for an electrochemical device functional layer according to any one of claims 1 to 3, wherein
the polymer A includes a (meth)acrylic acid ester monomer unit including an alkyl group having a carbon number of 4 or more in a proportion of 10 mass% or more, and
proportional content of a (meth)acrylic acid ester monomer unit including an alkyl group having a carbon number of 4 or more in the polymer B is not less than 0 mass% and not more than 5 mass%.

5. The composition for an electrochemical device functional layer according to any one of claims 1 to 4, wherein bulk specific gravity α of the particulate polymer and bulk specific gravity β of the heat-resistant fine particles satisfy a relationship 1 < β/α ≤ 5.

6. A laminate for an electrochemical device comprising: a substrate; and a functional layer for an electrochemical device formed on the substrate, wherein the functional layer for an electrochemical device is formed using the composition for an electrochemical device functional layer according to any one of claims 1 to 5.

7. An electrochemical device comprising the laminate for an electrochemical device according to claim 6.
